# EUROPEAN PATENT APPLICATION

(11) **EP 2 500 870 A1**
(43) Date of publication of application: **19.09.2012**
(21) Application number: 11382067.4
(22) Date of filing: 14.03.2011
(51) Int. Cl.: G07C 5/00, B64D 37/00, B64F 1/28

(54) **Maintenance systems and methods of an installation of a vehicle**

(71) Applicant: EADS Construcciones Aeronauticas, S.A., 28022 Madrid (ES)
(72) Inventor: Yagüe Martín, Ignacio, 28906, Getafe, Madrid (ES); Hernández Sánchez, Luis Miguel, 28906, Getafe, Madrid (ES)
(74) Representative: Elzaburu Marquez, Alberto

(57) **Abstract**

Maintenance system of an installation (10) of a vehicle, such a vision installation of a tanker aircraft, comprising a maintenance equipment (41; 47, 46) having means for performing the maintenance activities by means of an interactive communication between said maintenance equipment (41; 47, 46) and said installation (10), in which the installation (10) uses a first communication interface and it is provided with an I/O connector (31); the maintenance equipment (41; 47, 46) is provided with wireless connection means using a second communication interface; and the system also comprises a converter device (33) for said first and second communication interfaces connected to said I/O connector (31). The invention also refers to a method for performing the maintenance of said installation (10).

## Description

### FIELD OF THE INVENTION

The present invention relates to maintenance systems and methods of an installation of a vehicle and more in particular to maintenance systems and methods of an installation of an aircraft where the maintenance activities are performed by means of an interactive communication between the installation and a maintenance equipment.

### BACKGROUND OF THE INVENTION

Modern aircrafts -and similarly other vehicles- include complex installations whose maintenance needs involve maintenance activities performed by means of an interactive communication between the installation and a maintenance equipment, typically a computer system which is provided with suitable software means for performing maintenance activities.

The connection between the aircraft installation and the maintenance equipment is a single point-to-point connection by means of a physical cable, particularly in aircrafts, due to, among others reasons, safety reasons. Consequently, these maintenance activities shall be done in-situ.

The increasing complexity of aircraft installations involves increasing maintenance needs so that there is demand for simpler and more efficient maintenance systems and methods.

The present invention is focused on the attention of this demand.

### SUMMARY OF THE INVENTION

An object of the present invention is to provide wireless maintenance systems and methods for an installation of a vehicle, particularly, an aircraft.

Another object of the present invention is to provide remote maintenance systems and methods for an installation of a vehicle, particularly, an aircraft.

In one aspect these and other objects are met by a method for performing maintenance of an installation of a vehicle comprising steps of:
- establishing an operative connection between said installation, that uses a first communication interface, and a maintenance equipment, provided with wireless connection means using a second communication interface, using a converter device for said first and second communication interfaces;
- performing maintenance activities by means of an interactive communication between said maintenance equipment and said installation.

In embodiments of the present invention said maintenance equipment is a mobile device having means for performing said maintenance activities and said second communication interface is an interface for exchanging data over short distances using short-range radio-links (such as Bluetooth). Therefore it is achieved a maintenance method of installations of vehicles using a wireless connection.

In embodiments of the present invention said maintenance equipment comprise a first device having means for performing said maintenance activities and a second device having wireless connection means using a second communication interface, both devices having also means for communicating between them through the Internet and said second communication interface is an interface for exchanging data over short distances using short-range radio-links (such as Bluetooth). Therefore it is achieved a remote maintenance method of installations of vehicles.

In another aspect the above-mentioned objects are met by a maintenance system of an installation of a vehicle comprising a maintenance equipment having means for performing the maintenance activities by means of an interactive communication between said maintenance equipment and said installation, in which:
- the installation uses a first communication interface and it is provided with an I/O connector;
- the maintenance equipment is provided with wireless connection means using a second communication interface;
- also comprises a converter device for said first and second communication interfaces connected to said I/O connector.

In embodiments of the invention said maintenance equipment is a mobile device (such as a mobile phone, a PDA or a mobile computer such as an IPAD ^{™}, a tablet computer or a tablet PC -hereinafter a tablet-) having means for performing said maintenance activities and said second communication interface is an interface for exchanging data over short distances using short-range radio-links (such as Bluetooth). Therefore it is achieved a maintenance system where the maintenance activities can be performed through a wireless connection avoiding, on one side, the need of installing a cable connection for each maintenance operation and, on the other side, the constraint of performing the maintenance very close to the installation.

In embodiments of the invention, said maintenance equipment comprise a first device (such as a PC, a laptop, a PDA or a tablet) having means for performing said maintenance activities and a second device (such as a mobile phone, a PDA or a tablet) having wireless connection means using a second communication interface, both devices having also means for communicating between them through the Internet and said second communication interface is an interface for exchanging data over short distances using short-range radio-links (such as Bluetooth). Therefore it is achieved a maintenance system where the maintenance activities can be performed through a remote connection so that the maintenance of the installation can be in charge of specialized personnel.

In embodiments of the present invention, the installation is an aircraft installation using one of the following communication interfaces: ARINC429, MIL1553, RS232, RS422, RS485. Therefore it is achieved a maintenance system of particular interest for aircraft installations due to the high cost of in-situ maintenance activities.

In embodiments of the present invention, said vehicle is a tanker aircraft and said installation is an installation that provides a remote vision of the refueling scenario and said converter device includes an individual power source with a controlled switch for assuring that said maintenance activities can be only performed when the aircraft is on ground. Therefore it is achieved an efficient maintenance system for an installation that, on the one side, has important maintenance needs due to its complexity, and, on the other side, that may require maintenance activities in very different locations.

Other features and advantages of the present invention will be understood from the following detailed description in relation with the enclosed drawings.

### BRIEF DESCRIPTION OF DRAWINGS

Figure 1 is a block diagram of an installation of a tanker aircraft that provides a remote vision of the refueling scenario.
Figure 2 shows the main components of an embodiment of a maintenance system according to the present invention.
Figure 3 shows the main components of another embodiment of a maintenance system according to the present invention.

### DETAILED DESCRIPTION OF THE INVENTION

Preferred embodiments of this invention will be described in connection with an installation located in the tanker aircraft that provides an enhanced vision of the refueling scenario in aerial refueling operations using a boom device.

This installation helps the boom operators in the tanker aircraft to manipulate and control the boom until it makes a physical connection with the receptacle of the approaching receptor aircraft.

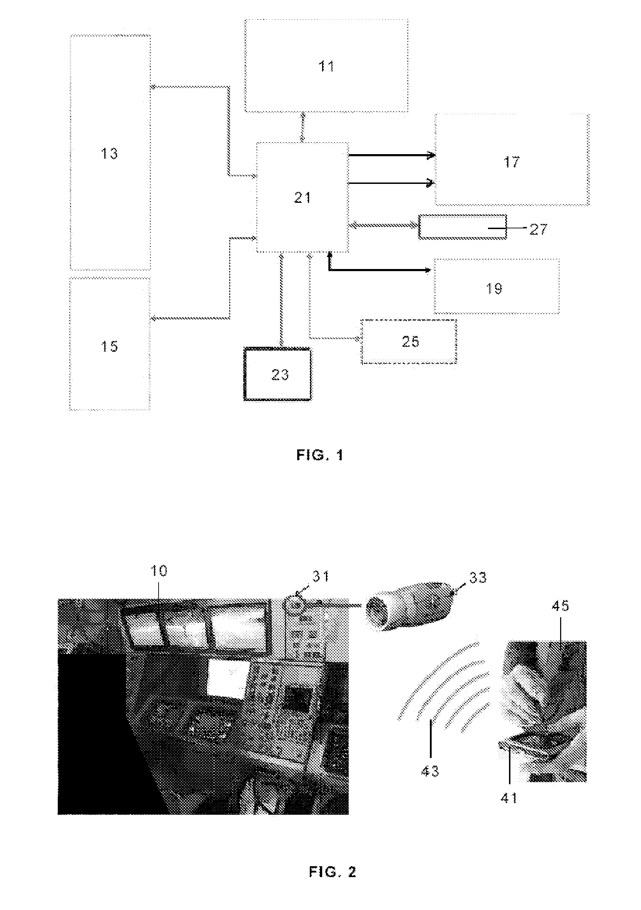

As illustrated in Figure 1 the vision installation 10 comprises:
- Illumination means 11 of the refueling scenario;
- Vision means including 3D cameras 13 and panoramic cameras 15;
- Monitoring means 17, including a dichroic mirror, for displaying images taken from said cameras installed in consoles for the boom operators;
- Recording means 19 for recording the images taken by said cameras;
- Control units 21, 23, 25;
- A maintenance interface 27 for performing maintenance activities from an external maintenance system.

An overview of the maintenance needs of the vision installation 10 follows.

| Equipment | Task | Need |
|---|---|---|
| 3D Monitors | - Vertical 3D image offset adjustment. | - Each time a new monitor or dichroic mirror is installed. |
| | | -After the substitution of a 3D camera. |
| Panoramic and inspection 3D cameras | - Parameters configuration. | - Occasionally. |
| | - Iris adjustments by default in inspection cameras. | - Occasionally. |
| | -Fine 3D position adjustment. | - After the substitution of an inspection camera. |
| Videorecorders | -Recording channel configuration. | -After the substitution of a VBR. |
| IR Illuminators | - Sensor Calibration. | - After the first installation. |
| | | - After the substitution of the optical fibre, optical focus or illumination module. |
| | | - When the system reports the need for calibration. |
| | - Supervision of the extended status. | - Whenever the equipment is calibrated. |

Within the meaning of the present invention the maintenance activities also comprise diagnosis activities such as the following:

| Equipment | Task | Need |
|---|---|---|
| Cameras | - Show internal image patterns. | - For the evaluation of image quality, etc. |
| Illuminators | - Graphic generation in real time for the supervision of several parameters as a function of time. | - Finding of breakdowns, evaluation of transients, etc. |
| | - Supervision of the bus through which each illuminator communicates. | - For the detection of external communication bus breakdowns. |
| Control units | - Show internal image patterns. | - For the evaluation of image quality, etc. |
| | - Manual activation of console lights and reading of console controls. | - For rapid diagnose of the correct state of the panel, etc. |
| Monitors | - Internal temperature report. | - For reading the temperature value registered inside the monitor in case of breakdown. |

In one embodiment of the invention illustrated in Figure 2 the I/O device for communicating the maintenance equipment with the vision installation 10 is a connector 31 installed in one of its consoles, the maintenance equipment 41 is a tablet with computing and communication capabilities provided with a suitable software for performing maintenance activities of said vision installation 10 and with wireless connection means using, particularly, Bluetooth. The maintenance system also comprise a converter 33 for the communication interface of the vision installation 10 (for instance RS485) and Bluetooth connected to the connector 31.

Bluetooth is a method for data communication that uses short-range radio-links to replace cables between computers and their connected units.

Bluetooth has been designed to operate in noisy radio frequency environments, and uses a fast acknowledgement and frequency-hopping scheme to make the link robust, communication-wise. Bluetooth radio modules avoid interference from other signals by hopping to a new frequency after transmitting or receiving a packet.

Bluetooth has built in sufficient encryption and authentication and is thus very secure in any environment. In addition to this, a frequency-hopping scheme with 1600 hops/sec. is employed. This is far quicker than any other competing system. This, together with an automatic output power adaption to reduce the range exactly to requirement, makes the system extremely difficult to eavesdrop.

Once the wireless connection 43 between the tablet 41 and the vision installation 10 is established, the maintenance activities are performed by maintenance personnel 45 using the software means of the tablet 41 in interactive communication with the maintenance interface 27 of the vision installation 10.

Performing the maintenance of the vision installation through a wireless connection simplifies the maintenance operations as there is no need of a cable connection and as the maintenance personnel can be located in any place within the Bluetooth range (approx. 100 m).

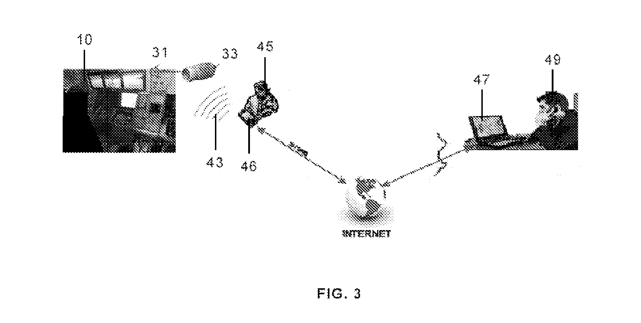

In another embodiment of the invention illustrated in Figure 3 for performing a remote maintenance of the vision installation 10 from a support centre, the maintenance equipment comprises:
- A tablet 46 with computing and communication capabilities for performing a wireless connection with the vision installation 10 and with the Internet to be operated by maintenance personnel 45 in the vicinity of the vision installation 10;
- A laptop 47 with a suitable software for performing maintenance activities of said vision installation 10 and communication capabilities for a wireless connection with the Internet to be operated by a maintenance personnel 49 in said remote support centre.
- A converter 33 for the communication interface of the vision installation 10 (for instance RS485) and Bluetooth connected to the connector 31.

Once the wireless connection 43 between the tablet 46 and the vision installation 10 is established and the tablet 46 is duly configured to act as a communication channel between the laptop 47 and the connector 31 (following a communication between maintenance personnel 45, 49 by mobile phone or by any other means), the maintenance activities are performed by a maintenance personnel 49 using the software means of laptop 47 in interactive communication with the maintenance interface 27 of the vision installation 10.

Performing a remote maintenance of the vision installation 10 using a combination of an Internet communication and a Bluetooth connection as described allows an efficient maintenance as it can be done by specialized personnel from a remote support centre.

In preferred embodiments the converter 33 is a portable device which is connected when the maintenance activities are needed. Eventually, if the converter is remained connected, it comprises an individual power source with a controlled switch for assuring that it will not be energized in flight. The converter 33 can therefore remain un-energized all the time, unless a maintenance activity of the vision installation 10 must be performed when the aircraft is on the ground. As a consequence, the qualification levels EMI/EMC of this converter will be smaller, as it will never be energized during flight.

This allows complying with the regulations of the FCC and FAA that prohibit airborne operation of radio-frequency wireless devices because their signals could interfere with critical aircraft instruments. In any case the maintenance activities shall be performed when the aircraft is on ground.

Although the present invention has been fully described in connection with preferred embodiments, it is evident that modifications may be introduced within the scope thereof, not considering this as limited by these embodiments, but by the contents of the following claims.

## Claims

1. Method for performing maintenance of an installation (10) of a vehicle comprising steps of:
- establishing an operative connection between said installation (10) provided with a first communication interface and a maintenance equipment (41; 47, 46) provided with wireless connection means using a second communication interface, using a converter device (33) for said first and second communication interfaces;
- performing maintenance activities by means of an interactive communication between said maintenance equipment (41; 47, 46) and said installation (10).

2. Method according to claim 1, wherein:
- said maintenance equipment (41) is a mobile device having means for performing said maintenance activities;
- said second communication interface is an interface for exchanging data over short distances using short-range radio-links.

3. Method according to claim 1, wherein:
- said maintenance equipment (47, 46) comprise a first device (47) having means for performing said maintenance activities and a second device (46) having wireless connection means using a second communication interface, both devices (47, 46) having also means for communicating between them through the Internet;
- said second communication interface is an interface for exchanging data over short distances using short-range radio-links.

4. Method according to any of claims 2-3, wherein said second communication interface is Bluetooth.

5. Method according to any of claims 1-4, wherein said vehicle is a tanker aircraft, said installation (10) is an installation that provides a remote vision of the refueling scenario and said first interface communication is one of the following: ARINC429, MIL1553, RS232, RS422, RS485.

6. Maintenance system of an installation (10) of a vehicle comprising a maintenance equipment (41; 47, 46) having means for performing the maintenance activities by means of an interactive communication between said maintenance equipment (41; 47, 46) and said installation (10), **characterized in that**:
- the installation (10) uses a first communication interface and it is provided with an I/O connector (31);
- the maintenance equipment (41; 47, 46) is provided with wireless connection means using a second communication interface;
- also comprises a converter device (33) for said first and second communication interfaces connected to said I/O connector (31).

7. Maintenance system according to claim 6, wherein:
- said maintenance equipment (41) is a mobile device having means for performing said maintenance activities;
- said second communication interface is an interface for exchanging data over short distances using short-range radio-links.

8. Maintenance system according to claim 7, wherein said second communication interface is Bluetooth.

9. Maintenance system according to any of claims 7-8, wherein said mobile device (41) is one of the following: a mobile phone, a PDA, a tablet computer.

10. Maintenance system according to claim 6, wherein:
- said maintenance equipment (47, 46) comprise a first device (47) having means for performing said maintenance activities and a second device (46) having wireless connection means using a second communication interface, both devices (47, 46) having also means for communicating between them through the Internet;
- said second communication interface is an interface for exchanging data over short distances using short-range radio-links.

11. Maintenance system according to claim 10, wherein said second communication interface is Bluetooth.

12. Maintenance system according to any of claims 10-11, wherein said first device (47) is one of the following; a laptop, a PDA, a tablet computer.

13. Maintenance system according to any of claims 10-12, wherein said second device (46) is one of the following: a mobile phone, a PDA, a tablet computer.

14. Maintenance system according to any of claims 6-13, wherein said vehicle is an aircraft and said first communication interface is one of the following: ARINC429, MIL1553, RS232, RS422, RS485.

15. Maintenance system according to claim 14, wherein:
- said vehicle is a tanker aircraft and said installation (10) is an installation that provides a remote vision of the refueling scenario;
- said converter device (33) includes an individual power source with a controlled switch for assuring that said maintenance activities can be only performed when the aircraft is on ground.
